# EUROPEAN PATENT APPLICATION

(11) **EP 4 528 517 A1**
(43) Date of publication of application: **26.03.2025**
(21) Application number: 23829470.6
(22) Date of filing: 07.03.2023
(51) Int. Cl.: G06F 11/14

(54) **BACKUP METHOD AND APPARATUS**

(30) Priority: 28.06.2022 CN 202210749821; 05.09.2022 CN 202211080338
(71) Applicant: Huawei Technologies Co., Ltd., Shenzhen, Guangdong 518129 (CN)
(72) Inventor: LIU, Jipeng, Shenzhen, Guangdong 518129 (CN); CUI, Hengji, Shenzhen, Guangdong 518129 (CN); HE, Jinbin, Shenzhen, Guangdong 518129 (CN)
(74) Representative: Gill Jennings & Every LLP
(86) International application number: PCT/CN2023/080062
(87) International publication number: WO 2024/001279

(57) **Abstract**

This application discloses a backup method and apparatus, and relates to the computer field, to implement cross-storage unit storage of a backup copy, so as to implement incremental backup after a capacity of a storage pool is enlarged. A specific solution is: obtaining backup task information, where the backup task information includes information about to-be-backed-up data and a backup storage identifier; obtaining list information of a first storage pool indicated by the backup storage identifier, where the list information indicates information about storage units in the first storage pool, the first storage pool includes a plurality of storage units, and the plurality of storage units are located in at least two storage clusters; reading the to-be-backed-up data from a production storage based on the information about the to-be-backed-up data; and storing, based on the list information, the to-be-backed-up data in one or more storage units in the first storage pool.

## Description

### TECHNICAL FIELD

This application relates to the computer field, and in particular, to a backup method and apparatus.

### BACKGROUND

With the continuous increase of massive data on servers, security and importance of various types of data are increasingly valued by people. During running of a system, data loss may be caused by various factors, such as network attacks, natural disasters, virus intrusion, power supply failures, and manual misoperations. Once data is lost, normal running of the system is severely affected. Therefore, it is important to back up and store data.

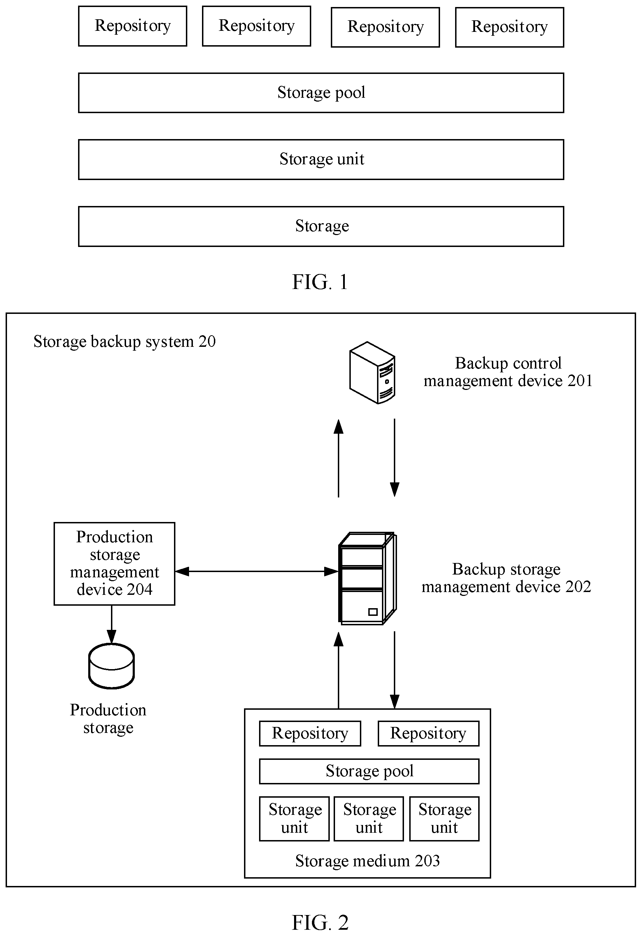

Currently, a backup storage resource (a storage, namely, a backup medium) is virtualized into a storage architecture shown in FIG. 1, and specifically includes three layers: a storage unit (storage unit, SU), a storage pool (storage pool, SP), and a repository (Repository). The storage unit is associated with a real backup medium, and is configured to store data. A capacity of the storage unit may be configured based on a user requirement. The storage pool virtualizes storage resources of the storage unit, so that a user does not care about a physical storage. The repository provides logical isolation between protected sets. One backup copy is generated each time a backup target (a disk, a virtual machine, or the like) is backed up.

In a current storage backup solution, a set of storages (for example, a cluster), as a storage unit, is usually configured as a storage pool, and a backup copy of a backup target is stored in the storage pool. When a capacity of the storage pool is limited, how to perform incremental backup in the storage pool after a new storage unit is added needs to be resolved.

### SUMMARY

This application provides a method and an apparatus for backing up and configuring a storage pool, to implement cross-storage unit storage of a backup copy, so as to implement incremental backup after a capacity of the storage pool is enlarged.

To achieve the foregoing objectives, the following technical solutions are used in embodiments of this application.

According to a first aspect, a backup method is provided. The method may include: obtaining backup task information including information about to-be-backed-up data and a backup storage identifier; obtaining list information of a first storage pool indicated by the backup storage identifier, where the list information indicates information about storage units in the first storage pool, the first storage pool includes a plurality of storage units, and the plurality of storage units are located in at least two storage clusters; reading the to-be-backed-up data from a production storage based on the information about the to-be-backed-up data; and storing, based on the list information of the first storage pool, the to-be-backed-up data in one or more storage units in the first storage pool.

This application provides a backup method and apparatus. List information indicating information about storage units in a storage pool is configured for the storage pool, and a plurality of storage units included in one storage pool are configured to be located in a plurality of storage clusters. In a backup, data blocks in a backup copy may be stored in the plurality of storage units in a distributed manner based on an actual requirement, and to-be-backed-up data and unmodified data may be stored in different storage clusters. Because each storage unit has a unique identifier, data recovery can be accurately implemented based on the list information of the storage pool. Therefore, the backup method in this application implements effective incremental backup after a capacity is enlarged.

Further, when a capacity of the storage pool is enlarged, a new storage cluster may be added to the storage pool as a storage unit. Only the list information of the storage pool needs to be updated to add information about the newly added storage unit, so that the capacity of the storage pool is enlarged, and the storage pool spans a plurality of storages. Although a backup copy can be stored across storage units, a plurality of backup copies are still in a same storage pool. A backup object is associated with a repository, and the repository is associated with a storage pool. A user does not need to be aware of a newly added hardware storage. Therefore, after a capacity of the storage pool is enlarged, incremental backup can still be performed without data migration, so as to achieve effective capacity enlargement.

In a possible implementation, the backup method provided in this application may further include: generating metadata of the to-be-backed-up data, where the metadata of the to-be-backed-up data includes an identifier of one or more storage units storing the to-be-backed-up data, so that the to-be-backed-up data is recovered based on the metadata of the to-be-backed-up data.

In a possible implementation, the backup task information further includes storage location information of metadata of a predecessor copy, and the predecessor copy is a copy of a backup object, in a previous backup, to which the to-be-backed-up data belongs. The metadata of the to-be-backed-up data further includes storage location information of data that is not modified by the to-be-backed-up data in the predecessor copy. The storage unit storing the to-be-backed-up data and a storage unit storing the data not modified by the to-be-backed-up data are located in different storage clusters. In this way, cross-storage unit incremental backup is implemented. When the capacity of the storage pool is enlarged, effective incremental backup is implemented.

In a possible implementation, the to-be-backed-up data belongs to a first backup file, and the backup task information further includes information about data that is not modified by the to-be-backed-up data and that is in the first backup file, to implement full backup.

In a possible implementation, the backup method provided in this application may further include: storing the metadata of the to-be-backed-up data in a first storage unit; and reporting information about the first storage unit. In this way, in a next backup, the metadata of the to-be-backed-up data is considered as metadata of a predecessor copy, so as to implement effective incremental backup.

In a possible implementation, a storage unit that stores metadata of copies of different backup targets may be preconfigured, and the metadata of the backup copies is quickly obtained during backup or recovery.

In a possible implementation, the backup storage identifier includes an identifier of the first storage pool or an identifier of a repository corresponding to the first storage pool.

In a possible implementation, the method provided in this application may further include: obtaining configuration task information, where the configuration task indicates to configure a second storage unit as a resource of a second storage pool, the second storage pool includes a plurality of storage units, and the plurality of storage units included in the second storage pool are located in at least two storage clusters; and recording information about the second storage unit in list information of the second storage pool. When a capacity of the storage pool is enlarged, the list information of the storage pool is updated in real time to ensure accuracy of a backup process.

In a possible implementation, the method provided in this application may further include: obtaining recovery task information, where the recovery task information includes information about to-be-recovered data; obtaining list information of a third storage pool that stores the to-be-recovered data; obtaining metadata of the to-be-recovered data based on the information about the to-be-recovered data, where the metadata of the to-be-recovered data includes storage location information of the to-be-recovered data; and reading the to-be-recovered data based on the list information of the third storage pool and the storage location information of the to-be-recovered data.

According to a second aspect, another backup method is provided, applied to a backup system. The backup system includes a backup control device, a backup storage device, and a production storage device. The backup method may include: The backup control device sends backup task information to the backup storage device, where the backup task information includes information about to-be-backed-up data and a backup storage identifier. The backup storage device obtains list information of a first storage pool indicated by the backup storage identifier, where the list information indicates information about storage units in the first storage pool, the first storage pool includes a plurality of storage units, and the plurality of storage units are located in at least two storage clusters. The backup storage device reads the to-be-backed-up data from the production storage device based on the information about the to-be-backed-up data. The backup storage device stores, based on the list information, the to-be-backed-up data in one or more storage units in the first storage pool.

According to a third aspect, a backup apparatus is provided. The apparatus may include: a first obtaining unit, a second obtaining unit, a reading unit, and a backup unit.

The first obtaining unit is configured to obtain backup task information, where the backup task information includes information about to-be-backed-up data and a backup storage identifier.

The second obtaining unit is configured to obtain list information of a first storage pool indicated by the backup storage identifier, where the list information indicates information about storage units in the first storage pool. The first storage pool includes a plurality of storage units, and the plurality of storage units are located in at least two storage clusters.

The reading unit is configured to read the to-be-backed-up data from a production storage based on the information about the to-be-backed-up data.

The backup unit is configured to store, based on the list information of the first storage pool, the to-be-backed-up data in one or more storage units in the first storage pool.

In a possible implementation, the backup apparatus may further include: a first processing unit, configured to generate metadata of the to-be-backed-up data, where the metadata of the to-be-backed-up data includes an identifier of one or more storage units storing the to-be-backed-up data.

In a possible implementation, the backup task information further includes storage location information of metadata of a predecessor copy, and the predecessor copy is a copy of a backup object, in a previous backup, to which the to-be-backed-up data belongs. The metadata of the to-be-backed-up data further includes storage location information of data that is not modified by the to-be-backed-up data in the predecessor copy; and the storage unit storing the to-be-backed-up data and a storage unit storing the data not modified by the to-be-backed-up data are located in different storage clusters.

In a possible implementation, the to-be-backed-up data belongs to a first backup file, and the backup task information further includes information about data that is not modified by the to-be-backed-up data and that is in the first backup file.

In a possible implementation, the backup unit is further configured to store the metadata of the to-be-backed-up data in a first storage unit. The backup apparatus may further include a reporting unit, configured to report information about the first storage unit.

In a possible implementation, the backup storage identifier includes an identifier of the first storage pool or an identifier of a repository corresponding to the first storage pool.

In a possible implementation, the first obtaining unit is further configured to obtain configuration task information, where the configuration task indicates to configure a second storage unit as a resource of a second storage pool. The second storage pool includes a plurality of storage units, and the plurality of storage units included in the second storage pool are located in at least two storage clusters. The backup apparatus may further include a second processing unit, configured to record information about the second storage unit in list information of the second storage pool.

In a possible implementation, the first obtaining unit is further configured to obtain recovery task information, where the recovery task information includes information about to-be-recovered data. The second obtaining unit is further configured to obtain list information of a third storage pool that stores the to-be-recovered data. The backup apparatus further includes a third obtaining unit, configured to: obtain metadata of the to-be-recovered data based on the information about the to-be-recovered data, where the metadata of the to-be-recovered data includes storage location information of the to-be-recovered data; and read the to-be-recovered data based on the list information of the third storage pool and the storage location information of the to-be-recovered data.

According to a fourth aspect, a backup system is provided. The backup system includes a backup control device, a backup storage device, and a production storage device.

The backup control device is configured to send backup task information to the backup storage device, where the backup task information includes information about to-be-backed-up data and a backup storage identifier.

The backup storage device is configured to: obtain list information of a first storage pool indicated by the backup storage identifier, where the list information indicates information about storage units in the first storage pool, the first storage pool includes a plurality of storage units, and the plurality of storage units are located in at least two storage clusters; read the to-be-backed-up data from the production storage device based on the information about the to-be-backed-up data; and store, based on the list information, the to-be-backed-up data in one or more storage units in the first storage pool.

According to a fifth aspect, this application provides a computing device. The computing device may implement a function in the method example described in the first aspect. The function may be implemented by hardware, or may be implemented by hardware executing corresponding software. The hardware or the software includes one or more modules corresponding to the functions. The computing device may exist in a product form of a chip.

In a possible implementation, the computing device may include a processor and a transmission interface. The transmission interface is configured to receive and send data. The processor is configured to invoke program instructions stored in a memory, so that the computing device performs a function in the method example described in the first aspect.

According to a sixth aspect, a computer-readable storage medium is provided, including instructions. When the instructions are run on a computer, the computer is enabled to perform the backup method according to any one of the foregoing aspects or any possible implementation.

According to a seventh aspect, a computer program product is provided. When the computer program product runs on a computer, the computer is enabled to perform the backup method according to any one of the foregoing aspects or any possible implementation.

According to an eighth aspect, a chip system is provided. The chip system includes a processor, and may further include a memory, configured to implement a function in the foregoing method. The chip system may include a chip, or may include a chip and another discrete component.

The solutions provided in the second aspect to the eighth aspect are used to implement the method provided in the first aspect, and therefore can achieve same beneficial effects as those in the first aspect. Details are not described herein again.

It should be noted that various possible implementations of any one of the foregoing aspects may be combined on a premise that there is no conflict between the solutions.

### BRIEF DESCRIPTION OF DRAWINGS

FIG. 1 is a diagram of a backup storage resource;
FIG. 2 is a diagram of an architecture of a storage backup system according to an embodiment of this application;
FIG. 3 is a diagram of a structure of a computing device according to an embodiment of this application;
FIG. 4 is a schematic flowchart of a resource pool configuration method according to an embodiment of this application;
FIG. 5 is a schematic flowchart of another resource pool configuration method according to an embodiment of this application;
FIG. 6 is a schematic flowchart of a backup method according to an embodiment of this application;
FIG. 7 is a schematic flowchart of a data recovery method according to an embodiment of this application;
FIG. 8 is a diagram of a structure of a backup apparatus according to an embodiment of this application;
FIG. 9 is a diagram of a structure of another backup apparatus according to an embodiment of this application; and
FIG. 10 is a diagram of a structure of another computing device according to an embodiment of this application.

### DESCRIPTION OF EMBODIMENTS

In the specification, claims, and accompanying drawings of this application, the terms "first", "second", "third", and the like are intended to distinguish between different objects but do not limit a particular order.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" are intended to present a related concept in a specific manner for ease of understanding.

In the descriptions of this application, unless otherwise specified, "/" indicates that associated objects are in an "or" relationship. For example, A/B may represent A or B. The term "and/or" in this application describes only an association relationship for describing associated objects and represents that three relationships may exist. For example, A and/or B may represent the following three cases: Only A exists, both A and B exist, and only B exists. A and B each may be singular or plural. In addition, in descriptions of this application, unless otherwise specified, "a plurality of" means two or more than two. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In embodiments of this application, "at least one" may alternatively be described as one or more, and "more" may be two, three, four, or more. This is not limited in this application.

Before embodiments of this application are described, terms in embodiments of this application are first explained.

A backup object indicates a source object in a backup operation, that is, a backup operation is to back up data in a backup object. The backup object can be a disk, a virtual machine, or a device that is in another form and that has a storage function.

A backup copy indicates a result obtained by performing one backup operation on one backup object. The backup copy includes metadata and backup data. The backup data is a backup of data in the backup object. The metadata is used to record information about the backup object. The metadata may be further used to record a storage location of data in the backup data in a storage unit. Metadata of one backup copy may be shown in Table 1. The metadata records copy information, disk information, and data block information. The copy information is used to record an identifier of a backup copy, the disk information is used to record a disk identifier stored by a data block, and the data block information is used to record an identifier of the data block.

**Table 1**

| | |
|---|---|
| Copy information (Snap Header) | Backup copy identifier |
| | ... |
| Disk information (Disk Header) | Disk identifier |
| | ... |
| Data block information (Block array) | Data block identifier |
| | ... |
| | ... |

A backup chain indicates a set of all backup copies of one backup object. A data structure of a backup chain of one backup object may be shown in Table 2. The backup object corresponds to a repository 1, that is, all backup copies of the backup object are stored in a resource of the repository 1.

**Table 2**

| Identifier of a backup copy in a backup chain | Repository |
|---|---|
| Backup copy 1 | Repository 1 |
| Backup copy 2 | Repository 1 |
| Backup copy 3 | Repository 1 |
| ... | ... |
| Backup copy n | Repository 1 |

A storage cluster, which may also be referred to as a storage, indicates an entity hardware apparatus, for example, a disk or in another form, configured to store data.

A storage unit indicates a resource set that is used for storage and that is obtained by virtualizing stored resources based on a user requirement. One storage unit may be formed by one or more storages, or one storage unit may be a part of a resource of a storage.

A storage pool is a concept obtained through further virtualization of storage resources on the basis of storage units. One or more storage units form a storage pool.

A repository is a set of resources used to store all backup copies of one backup object. The repository provides logical isolation between backup objects. Resources in one repository may include one or more storage units, and the repository corresponds to a storage pool to which resources included by the repository belong.

This application provides a backup method and apparatus. List information indicating information about storage units in a storage pool is configured for the storage pool, and a plurality of storage units included in one storage pool are configured to be located in a plurality of storage clusters. In a backup, data blocks in a backup copy may be stored in the plurality of storage units in a distributed manner based on an actual requirement, and to-be-backed-up data and unmodified data may be stored in different storage clusters. Because each storage unit has a unique identifier, data recovery can be accurately implemented based on the list information of the storage pool. Therefore, the backup method in this application implements effective incremental backup after a capacity is enlarged.

Further, when a capacity of the storage pool is enlarged, a new storage cluster may be added to the storage pool as a storage unit. Only the list information of the storage pool needs to be updated to add information about the newly added storage unit, so that the capacity of the storage pool is enlarged, and the storage pool spans a plurality of storages. Although a backup copy can be stored across storage units, a plurality of backup copies are still in a same storage pool. A backup object is associated with a repository, and the repository is associated with a storage pool. A user does not need to be aware of a newly added hardware storage. Therefore, after the capacity of the storage pool is enlarged, incremental backup can still be performed without data migration, so as to achieve effective capacity enlargement.

The following describes implementations of embodiments of this application in detail with reference to accompanying drawings.

The solutions provided in this application may be applied to a storage backup system 20 shown in FIG. 2. As shown in FIG. 2, the storage backup system 20 may include a backup control management device 201, a backup storage management device 202, a storage medium 203, and a production storage management device 204.

The production storage management device 204 is configured to manage data of a backup object. The storage medium 203 is an actual physical storage, and is configured to provide a storage resource. The storage resource provided by the storage medium 203 may be virtualized into a storage unit, a storage pool, and a repository.

The backup control management device 201 is a control center of the storage backup system 20. The backup control management device 201 may interact with a user to obtain a backup requirement or the like. The backup control management device 201 may further deliver a task to the backup storage management device 202 to perform storage resource configuration, data backup, data recovery, or the like.

The backup storage management device 202 is an executor of a backup operation in the storage backup system 20. For example, the backup storage management device 202 may execute a task delivered by the backup control management device 201 to configure a resource in the storage medium 203, or back up data provided by the production storage management device 204, and store a backup copy in the storage medium 203, or recover a backup copy from the storage medium 203 to the production storage management device 204.

For example, the backup control management device 201, the backup storage management device 202, and the production storage management device 204 may be computing devices (for example, servers) or in other forms. Specific product forms of the computing devices are not limited in embodiments of this application.

It should be noted that FIG. 2 is merely an example to show an architecture of the storage backup system, and is not intended to limit an application scenario of the solutions in this application. In actual application, architecture content of the storage backup system may be configured based on an actual requirement. This is not limited in embodiments of this application.

For example, the storage backup system 20 may be a backup system of a storage or a cloud storage, or the storage backup system 20 may be a backup system in another backup-related scenario. An application scenario is not limited in embodiments of this application.

The solutions provided in embodiments of this application are described below in detail with reference to the accompanying drawings.

According to one aspect, an embodiment of this application provides a computing device, configured to perform the solutions provided in this application. For example, the computing device may be the backup storage management device 202 shown in FIG. 2.

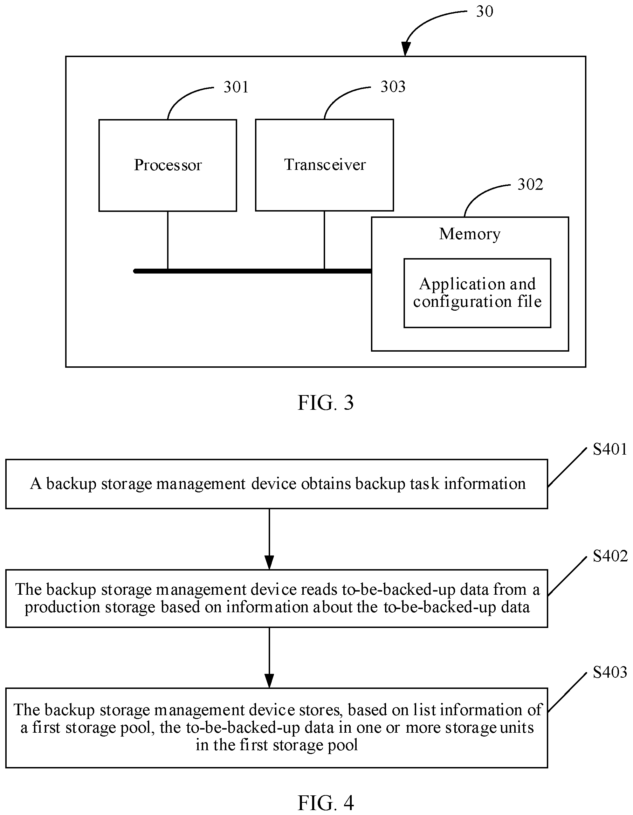

FIG. 3 is a diagram of a structure of a computing device 30 according to an embodiment of this application. As shown in FIG. 3, the computing device 30 may include a processor 301, a memory 302, and a transceiver 303.

The following specifically describes each component of the computing device 30 with reference to FIG. 3.

The memory 302 may be a volatile memory (volatile memory), for example, a random access memory (random access memory, RAM); or a non-volatile memory (non-volatile memory), for example, a read-only memory (read-only memory, ROM), a flash memory (flash memory), a hard disk drive (hard disk drive, HDD), or a solid state drive (solid state drive, SSD); or a combination of the foregoing types of memories, configured to store application code, a configuration file, data information, or other content that can implement the method in this application. In another possible case, the memory 302 may alternatively be deployed in another device independent of the computing device 30.

The transceiver 303 is configured to exchange information between the computing device 30 and another device.

The processor 301 may be a control center of the computing device 30. For example, the processor 301 may be a central processing unit (central processing unit, CPU), or an application-specific integrated circuit (application-specific integrated circuit, ASIC), or may be used as one or more integrated circuits implementing embodiments of this application, for example, one or more microprocessors (digital signal processors, DSPs) or one or more field programmable gate arrays (field programmable gate arrays, FPGAs).

For example, the processor 301 may perform the following functions by running or executing software program and/or a module stored in the memory 302:
obtaining backup task information, where the backup task information includes information about to-be-backed-up data and a backup storage identifier; obtaining list information of a first storage pool indicated by the backup storage identifier, where the list information indicates information about storage units in the first storage pool, the first storage pool includes a plurality of storage units, and the plurality of storage units are located in at least two storage clusters; reading the to-be-backed-up data from a production storage based on the information about the to-be-backed-up data; and storing, based on the list information of the first storage pool, the to-be-backed-up data in one or more storage units in the first storage pool.

In the solutions provided in this application, a unique identifier is configured for a storage unit, and list information is configured for a storage pool. List information of one storage pool indicates information about storage units in the storage pool.

For example, one piece of stored list information may include an identifier and an access path of a storage unit in the storage pool.

Specifically, an identifier of a storage unit/a storage pool/a repository uniquely indicates the storage unit/the storage pool/the repository, and is not repeated in an entire backup system. For example, the identifier of the storage unit may be an index or in another form.

The access path of the storage unit is used to access the storage unit in the storage pool. Specific content of the access path of the storage unit is not limited in embodiments of this application.

For example, the access path of the storage unit may be a mounting path of the storage unit in a backup server.

In a possible implementation, list information of one storage pool may further include whether a storage unit included in the storage pool is writable.

In a possible implementation, the list information of the storage pool may be stored in a dedicated storage unit in the storage pool.

In another possible implementation, the list information of the storage pool may be stored in each storage unit in the storage pool.

For example, it is assumed that two storage units, SU_0 and SU_1, are configured in a storage pool SP_0, and one storage unit SU_2 is configured in a storage pool SP_1.

Both SU_0 and SU_1 belong to the storage pool SP_0. List information recorded in SU_0 and SU_1 is list information of the storage pool SP_0. The list information includes identifiers and access paths of all storage units (SU_0 and SU_1) in the storage pool SP_0. The list information recorded in SU_0 and SU_1 is shown in Table 3 below.

**Table 3**

| Identifier of a storage unit | Information about the storage unit | Identifier of an owning storage pool |
|---|---|---|
| SU_0 | Index of SU_0 | SP_0 |
| | Type of SU_0 | |
| | Access path of SU_0 | |
| | User name for accessing SU_0 | |
| | Password for accessing SU_0 | |
| SU_1 | Index of SU_1 | SP_0 |
| | Type of SU_1 | |
| | Access path of SU_1 | |
| | User name for accessing SU_1 | |
| | Password for accessing SU_1 | |

SU_2 belongs to the storage pool SP_1, and list information recorded in SU_2 is an identifier and an access path of all storage units (SU_2) in the storage pool SP_1. The list information recorded in SU_2 is shown in Table 4 below.

**Table 4**

| Identifier of a storage unit | Information about the storage unit | Identifier of an owning storage pool |
|---|---|---|
| SU_2 | Index of SU_2 | SP_1 |
| | Type of SU_2 | |
| | Access path of SU_2 | |
| | User name for accessing SU_2 | |
| | Password for accessing SU_2 | |

Further, when a capacity of the storage pool is enlarged, a new storage cluster may be added to the storage pool as a storage unit. Only the list information of the storage pool needs to be updated to add information about the newly added storage unit, so that the capacity of the storage pool is enlarged, and the storage pool spans a plurality of storages. Although a backup copy can be stored across storage units, a plurality of backup copies are still in a same storage pool. A backup object is associated with a repository, and the repository is associated with a storage pool. A user does not need to be aware of a newly added hardware storage. Therefore, after the capacity of the storage pool is enlarged, incremental backup can still be performed without data migration, so as to achieve effective capacity enlargement.

Further, because the list information of the storage pool includes information about a storage unit in the storage pool, after a storage unit is added to the storage pool, the list information of the storage pool needs to be updated, so as to add information about the newly added storage unit.

For example, based on the examples in Table 3 and Table 4, it is assumed that the storage unit SU_1 is added to SP_1. SU_0 belongs to the storage pool SP_0. The storage units included in the storage pool SP_0 remain unchanged, and the list information of the storage pool SP_0 remains unchanged. The storage unit SU_1 is added to SP_1, and the list information of SP_1 needs to be updated to include information about SU_1 and SU_2. The list information recorded in SU_1 includes the list information of SP_0 and the list information of SP_1, and the list information recorded in SU_2 is updated list information of SP_1.

The list information recorded in SU_1 is changed to that shown in Table 5. The list information recorded in SU_2 is changed to that shown in Table 6.

**Table 5**

| Identifier of a storage unit | Information about the storage unit | Identifier of an owning storage pool |
|---|---|---|
| SU_0 | Index of SU_0 | SP_0 |
| | Type of SU_0 | |
| | Access path of SU_0 | |
| | User name for accessing SU_0 | |
| | Password for accessing SU_0 | |
| SU_1 | Index of SU_1 | SP_0 and SP_1 |
| | Type of SU_1 | |
| | Access path of SU_1 in SP_0 | |
| | Access path of SU_0 in SP_0 | |
| | User name for accessing SU_1 | |
| | Password for accessing SU_1 | |
| SU_2 | Index of SU_2 | SP_1 |
| | Type of SU_2 | |
| | Access path of SU_2 | |
| | User name for accessing SU_2 | |
| | Password for accessing SU_2 | |

Because SU_1 exists in SP_0 and SP_1, the list information recorded in SU_1 records access paths of SU_1 in the two storage pools. Because the storage pools SP_0 and SP_1 are created on different backup servers, the storage unit SU_1 needs to be mounted to the two backup servers. Although the access paths are different, the same storage unit is accessed.

**Table 6**

| Identifier of a storage unit | Information about the storage unit | Identifier of an owning storage pool |
|---|---|---|
| SU_2 | Index of SU_2 | SP_1 |
| | Type of SU_2 | |
| | Access path of SU_2 | |
| | User name for accessing SU_2 | |
| | Password for accessing SU_2 | |
| SU_1 | Index of SU_1 | SP_0 and SP_1 |
| | Type of SU_1 | |
| | Access path of SU_1 | |
| | User name for accessing SU_1 | |
| | Password for accessing SU_1 | |

It should be noted that the foregoing Table 3 to Table 6 merely describe the list information of the storage unit by using an example, and do not specifically limit content and a form of the list information.

In another aspect, an embodiment of this application provides a backup method. The backup method may be performed by a backup storage management device. The backup storage management device is configured to perform storage backup, and may be the backup storage management device 202 shown in FIG. 2. The backup method may be used in combination with the foregoing resource pool configuration method, or may be used independently. This is not limited in embodiments of this application.

It should be noted that a process of performing backup by executing a backup task each time is the same. In the following embodiments of this application, a process of performing backup once is used as an example for description. Other details are not described one by one.

As shown in FIG. 4, a backup method provided in an embodiment of this application may include the following steps.

S401: A backup storage management device obtains backup task information.

The backup task information includes information about to-be-backed-up data and a backup storage identifier.

Specifically, the to-be-backed-up data is, in comparison with a previous backup, modified data in a first backup object to which the to-be-backed-up data belongs in this backup. The information about the to-be-backed-up data indicates the to-be-backed-up data.

For example, the information about the to-be-backed-up data may be an identifier of the first backup object.

The backup task information indicates to store the to-be-backed-up data in a storage pool indicated by the backup storage identifier.

Specifically, the backup storage identifier indicates a first storage pool, and the first storage pool is used to store a backup copy of a first backup object to which to-be-backed-up data belongs. There may be one or more first storage pools.

In a possible implementation, the backup storage identifier may be an identifier of the first storage pool, or the backup storage identifier may be an identifier of a repository that stores the backup copy of the first backup object.

In another possible implementation, the backup storage identifier may be an identifier of the first backup object.

For example, a storage pool storing a backup copy of each backup object is preconfigured. When obtaining the backup task information in S401, the backup storage management device may determine, based on the identifier of the first backup object, the first storage pool storing the backup copy of the first backup object.

For example, a repository storing a backup copy of each backup object is preconfigured. When obtaining the backup task information in S401, the backup storage management device may determine, based on the identifier of the first backup object, the repository storing the backup copy of the first backup object, and determine a storage pool corresponding to the repository as the first storage pool.

Further, the backup task information further includes storage location information of metadata of a predecessor copy, and the predecessor copy is a copy of the first backup object, in a previous backup, to which the to-be-backed-up data belongs.

The storage location information may be an identifier of a storage unit.

Further, the to-be-backed-up data belongs to a first backup file, and the backup task information further includes information about data that is not modified by the to-be-backed-up data and that is in the first backup file, so as to implement full backup on the first backup file.

In a possible implementation, in S401, the backup storage management device may receive the backup task information from a backup control management device, or in S401, the backup storage management device may receive the backup task entered by a user. A source of the backup task information is not limited in embodiments of this application.

S402: The backup storage management device reads the to-be-backed-up data from a production storage based on the information about the to-be-backed-up data.

Specifically, in S402, the backup storage management device reads, based on the information about the to-be-backed-up data, the to-be-backed-up data by interacting with the production storage.

S403: The backup storage management device stores, based on list information of the first storage pool, the to-be-backed-up data in one or more storage units in the first storage pool.

Specifically, the list information of the first storage pool records information about storage units in the first storage pool. In S403, the one or more storage units that can be used to store the to-be-backed-up data in the first storage pool may be determined based on the list information of the first storage pool, and then the to-be-backed-up data is stored in the one or more storage units in the first storage pool.

For example, the backup storage management device may store, based on the list information of the first storage pool, the to-be-backed-up data in one or more writable storage units in the first storage pool.

Specifically, in S403, the backup storage management device first determines the writable storage unit in the first storage pool.

In a possible implementation, the backup storage management device records the writable storage unit in the first storage pool, and the writable storage unit in the first storage pool may be determined based on recorded content in S403.

In another possible implementation, the backup control management device records the writable storage unit in the first storage pool. In S403, the backup storage management device interacts with the backup control management device to determine the writable storage unit in the first storage pool.

In yet another possible implementation, the list information of the first storage pool includes whether a storage unit in the first storage unit is writable. In S403, the backup storage management device may determine, from the list information of the first storage pool, the writable storage unit in the first storage pool. A storage location of the list information of the first storage pool is known to the backup storage management device.

For example, the list information of the first storage pool is stored in each storage unit in the first storage pool. In S403, the backup storage management device may obtain the list information of the first storage pool from any storage unit in the first storage pool, and then determine a writable storage unit in the first storage pool.

Further, in S403, the backup storage management device may determine, according to a backup policy, one or more storage units that store the to-be-backed-up data in the first storage pool.

Specifically, in a storage backup, the backup copy may be divided into data blocks for storage. Sizes of the data blocks obtained through division may be configured based on an actual requirement. This is not limited in embodiments of this application.

Further, data blocks in the first backup copy are stored in several storage units, which may be set based on a service requirement or a function of a backup system. This is not limited in embodiments of this application.

For example, one data block may be stored in one storage unit.

For example, the backup policy may include selecting a storage unit with a largest remaining capacity. For example, when S403 is performed, each data block in the to-be-backed-up data may be traversed, and a storage unit with a largest remaining capacity is selected for each data block for storage.

For example, the backup policy may include selecting a storage unit with a fastest read/write speed. For example, when S403 is performed, each data block in the to-be-backed-up data may be traversed, and a storage unit with a fastest read/write speed is selected for each data block for storage.

A capacity and a read/write speed of a storage unit may be used as attribute parameters of the storage unit, and may be recorded by the backup storage management device for use, or may be recorded by the backup control management device, and the backup storage management device obtains the attribute parameters through interaction. A manner of obtaining the capacity and the read/write speed of the storage unit is not limited in embodiments of this application.

Further, the backup storage management device stores, based on the list information of the first storage pool and an access path of a storage unit indicated by the list information, the to-be-backed-up data in one or more storage units determined in the first storage pool.

This application provides a backup method. List information indicating information about storage units in a storage pool is configured for the storage pool, and a plurality of storage units included in one storage pool are configured to be located in a plurality of storage clusters. In a backup, data blocks in a backup copy may be stored in the plurality of storage units in a distributed manner based on an actual requirement. Because a plurality of storage units in one storage pool come from at least two storage clusters, the to-be-backed-up data and unmodified data may be stored in different storage clusters. Because each storage unit has a unique identifier, data recovery can be accurately implemented based on the list information of the storage pool. Therefore, the backup method in this application implements effective incremental backup after a capacity is enlarged.

Further, when a capacity of the storage pool is enlarged, a new storage cluster may be added to the storage pool as a storage unit. Only the list information of the storage pool needs to be updated to add information about the newly added storage unit, so that the capacity of the storage pool is enlarged, and the storage pool spans a plurality of storages. Although a backup copy can be stored across storage units, a plurality of backup copies are still in a same storage pool. A backup object is associated with a repository, and the repository is associated with a storage pool. A user does not need to be aware of a newly added hardware storage. Therefore, after a capacity of the storage pool is enlarged, incremental backup can still be performed without data migration, so as to achieve effective capacity enlargement.

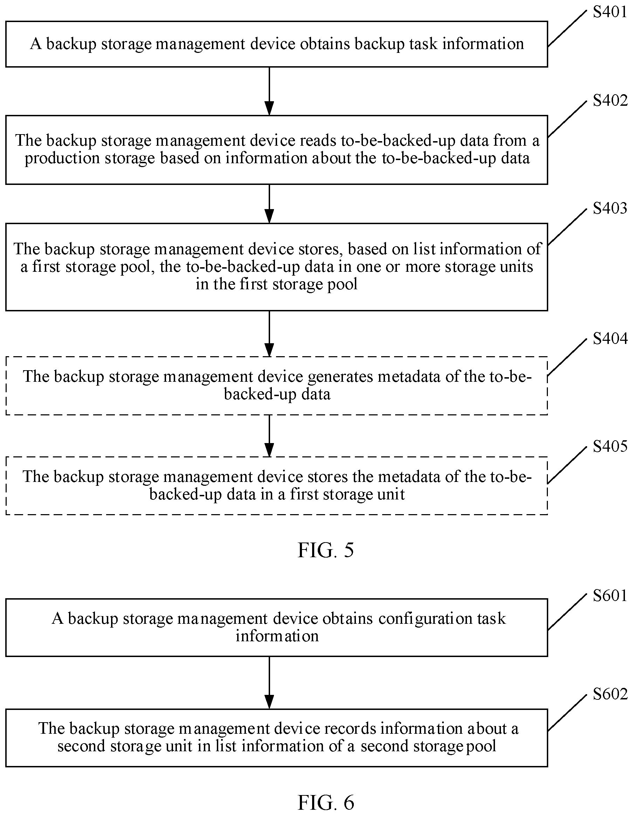

Further, as shown in FIG. 5, the backup method provided in this embodiment of this application may further include S404.

S404: The backup storage management device generates metadata of the to-be-backed-up data.

The metadata of the to-be-backed-up data includes an identifier of one or more storage units storing the to-be-backed-up data.

It should be understood that metadata of one backup copy records storage location information of each data block in a backup copy when a current backup operation is performed on the backup object. The storage location information may be an identifier of a storage unit.

Further, in S403, incremental backup is performed, and the metadata of the to-be-backed-up data further includes storage location information of data that is not modified by the to-be-backed-up data in the predecessor copy. The storage unit storing the to-be-backed-up data and a storage unit storing the data not modified by the to-be-backed-up data may be located in different storage clusters.

Specifically, incremental backup is performed in S403. Because storage location information of the data that is not modified by the to-be-backed-up data needs to borrow storage location information of data that is in the metadata of the predecessor copy and that is not modified by the to-be-backed-up data, when the metadata of the to-be-backed-up data is generated in S404, the backup storage management device first obtains the storage location information of the metadata of the predecessor copy, to obtain the metadata of the predecessor copy, and then generates the metadata of the to-be-backed-up data.

In a possible implementation, the backup task information obtained in S401 further includes the storage location information of the metadata of the predecessor copy. The backup storage management device may obtain the storage location information of the metadata of the predecessor copy from the backup task information, obtain the metadata of the predecessor copy based on the storage location information, and parse the metadata to obtain the storage location information of the data that is not modified by the to-be-backed-up data in the predecessor copy.

In another possible implementation, a storage unit storing metadata of copies of different backup objects is preconfigured. In S404, the backup storage management device obtains the metadata of the predecessor copy from a preconfigured storage unit storing metadata of a copy of the first backup object, and parses the metadata to obtain the storage location information of the data that is not modified by the to-be-backed-up data in the predecessor copy.

For example, the first backup object may be divided into three data blocks, which are respectively recorded as a data block 1, a data block 2, and a data block 3. In a previous backup, all backup copies are stored in a storage unit a in the first storage pool, and metadata is shown in Table 7.

**Table 7**

| Data block identifier | Storage location |
|---|---|
| Data block 1 | Storage unit a |
| Data block 2 | Storage unit a |
| Data block 3 | Storage unit a |

After a capacity of the first storage pool is enlarged by a storage unit b, in a current backup, the data block 2 is modified. The data block 2 is stored in the storage unit b by performing the foregoing process of S401 to S403. The metadata may be shown in Table 8.

**Table 8**

| Data block identifier | Storage location |
|---|---|
| Data block 1 | Storage unit a |
| Data block 2 | Storage unit b |
| Data block 3 | Storage unit a |

It should be noted that Table 7 and Table 8 describe the metadata only by using examples, and do not constitute a specific limitation on a form and content of the metadata.

For example, current backup metadata of the first backup copy may be shown in Table 9.

**Table 9**

| | |
|---|---|
| Copy information (Snap Header) | Backup copy identifier |
| | ... |
| Disk information (Disk Header) | Disk identifier |
| | ... |
| Data block information (Block array) | Data block identifier |
| | Identifier of a storage unit |
| | ... |

Compared with the metadata shown in Table 1, the identifier of the storage unit is added to the metadata shown in Table 9, so as to facilitate data recovery when data blocks in a backup copy are stored in different storage units in a distributed manner.

For example, a backup chain of the first backup object may be shown in Table 10.

**Table 10**

| Identifier of a backup copy in a backup chain | Repository | Storage unit in which metadata is located |
|---|---|---|
| Backup copy 1 | Repository 1 | Storage unit a |
| Backup copy 2 | Repository 1 | Storage unit b |
| First backup copy | Repository 1 | First storage unit |
| ... | ... | ... |
| Backup copy n | Repository 1 | Storage unit c |

S405: The backup storage management device stores the metadata of the to-be-backed-up data in the first storage unit.

In a possible implementation, the storage unit storing the metadata of the copies of the different backup objects is preconfigured, and the first storage unit is the preconfigured storage unit storing the metadata of the copy of the first backup object.

In another possible implementation, the first storage unit may be any storage unit in the first storage pool. A manner of selecting the first storage unit is not limited in embodiments of this application. Correspondingly, the method provided in this embodiment of this application further includes: reporting an identifier of the first storage unit, so that the identifier of the first storage unit is carried in backup task information of a next backup operation performed on the first backup object.

Further, the to-be-backed-up data belongs to the first backup file, and the backup task information further includes the information about the data that is not modified by the to-be-backed-up data and that is in the first backup file, so as to implement full backup on the first backup file. Correspondingly, in S402, the data not modified by the to-be-backed-up data is further read from the production storage based on the information about the data not modified by the to-be-backed-up data. In S403, the data not modified by the to-be-backed-up data is stored in one or more storage units in the first storage pool based on the list information of the first storage pool, and the storage location information is recorded in the metadata.

Further, the backup method provided in this embodiment of this application may further include a process of configuring a resource pool. The process may be shown in FIG. 6.

It should be noted that a process of configuring a resource pool each time is the same. In the following embodiments of this application, a process of configuring a resource pool once is used as an example for description. Other details are not described one by one.

As shown in FIG. 6, a storage pool configuration method provided in an embodiment of this application may include the following steps.

S601: A backup storage management device obtains configuration task information.

The configuration task information indicates to configure a second storage unit as a resource of a second storage pool. The second storage pool includes a plurality of storage units, and the plurality of storage units included in the second storage pool are located in at least two storage clusters.

In a possible implementation, in S601, the backup storage management device may receive the configuration task information from a backup control management device, or in S601, the backup storage management device may receive the configuration task information entered by a user. A source of the configuration task information is not limited in embodiments of this application.

Specifically, there are one or more second storage pools. For example, there are a plurality of second storage pools, so that a storage unit is shared by the plurality of storage pools.

In a possible implementation, when a backup storage system is established, S601 may be performed to configure a storage pool of the system. The second storage pool is a newly configured storage pool.

In another possible implementation, when a capacity of the second storage pool is enlarged, S601 may be performed to configure the storage pool of the system. In this case, a resource of the second storage unit may be a resource in a storage that is newly added during capacity enlargement, and a storage unit is configured for the second storage pool.

For example, the second storage unit and a resource of the configured storage unit in the second storage pool belong to a same storage cluster, or the second storage unit and a resource of the configured storage unit in the second storage pool belong to different storage clusters.

S602: The backup storage management device records information about the second storage unit in list information of the second storage pool.

The list information of the storage pool is described in detail in the foregoing content. Details are not described herein again.

For example, in S602, the backup storage management device may obtain an identifier of the second storage unit and an access path of the second storage unit in the second storage pool, and then record the identifier and the access path of the second storage unit in the list information of the second storage pool.

In a possible implementation, the configuration task information obtained in S601 includes the access path of the second storage unit in the second storage pool.

For example, when the list information of the storage pool is stored in each storage unit in the storage pool, in S602, the backup storage management device stores updated list information of the second storage pool (list information that records information about the second storage unit) in the second storage unit, and updates list information stored in a storage unit other than the second storage unit in the second storage pool to the updated list information of the second storage pool.

In a possible implementation, the updating list information stored in a storage unit other than the second storage unit in the second storage pool to the updated list information of the second storage pool may be implemented as: adding the information about the second storage unit to the list information stored in the storage unit other than the second storage unit in the second storage pool.

Further, after S602, the backup storage management device may further record a mapping relationship between a storage unit and a storage pool, to record a mapping relationship between a repository, a storage pool, and a storage unit, so as to implement an objective of recording multi-layer resource mapping.

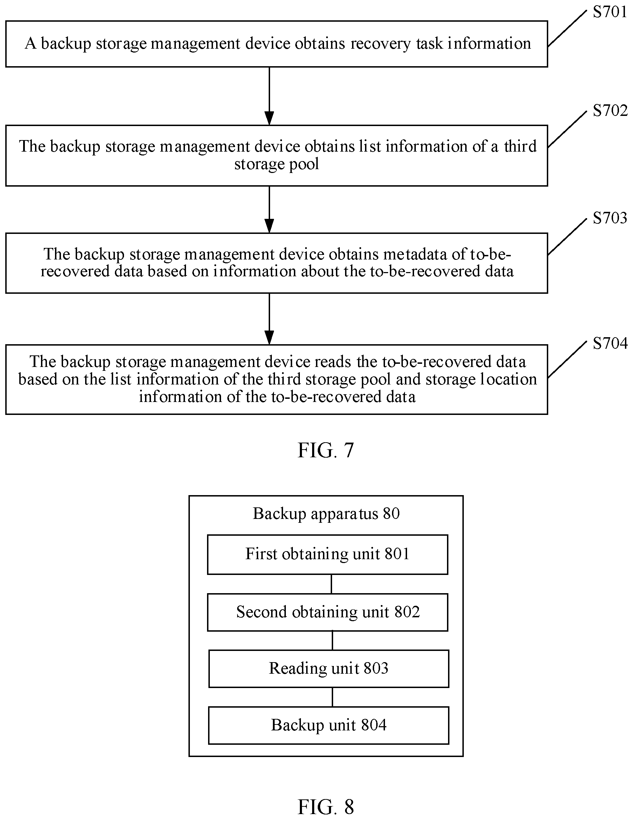

Further, the backup method provided in this embodiment of this application may further include a data recovery process. The process may be shown in FIG. 7. The data recovery process may be used in combination with the foregoing backup method and/or the resource pool configuration method, or may be used independently. This is not limited in embodiments of this application. The data recovery process may be performed by the backup storage management device. The backup storage management device is configured to perform storage backup reply, and may be the backup storage management device 202 shown in FIG. 2.

It should be noted that a process of performing data recovery each time is the same. In the following embodiments of this application, a process of performing data recovery once is used as an example for description. Other details are not described one by one.

As shown in FIG. 7, a data recovery process provided in an embodiment of this application may include the following steps.

S701: A backup storage management device obtains recovery task information.

The recovery task information includes information about to-be-recovered data. The information about the to-be-recovered data indicates a latest backup copy of a second backup object.

Specifically, the recovery task information indicates to recover the to-be-recovered data from a third storage pool. The third storage pool is configured to store a backup copy of the second backup object.

In a possible implementation, the information about the to-be-recovered data may be an identifier of the second backup object, and a second backup copy is a latest backup copy of the second backup object.

In another possible implementation, the information about the to-be-recovered data may be an identifier of the third storage pool, or the information about the to-be-recovered data may be an identifier of a repository corresponding to the third storage pool.

Specifically, the third storage pool may be determined based on the information about the to-be-recovered data.

For example, there may be one or more third storage pools.

In a possible implementation, in S701, the backup storage management device may receive the recovery task information from a backup control management device, or in S701, the backup storage management device may receive the recovery task information entered by a user. A source of the recovery task information is not limited in embodiments of this application.

S702: The backup storage management device obtains list information of the third storage pool.

In a possible implementation, the backup storage management device may obtain the list information of the third storage pool from any storage unit of the third storage pool.

In another possible implementation, the backup storage management device may obtain the list information of the third storage pool from a storage unit that is in the third storage pool and that is dedicated to storing the list information.

S703: The backup storage management device obtains metadata of the to-be-recovered data based on the information about the to-be-recovered data.

The metadata of the to-be-recovered data includes storage location information of the to-be-recovered data.

In a possible implementation, a storage location of metadata of different backup objects is preconfigured, and the metadata of the to-be-recovered data may be obtained based on the storage location of the metadata of the second backup object indicated by the information about the to-be-recovered data.

In another possible implementation, the recovery task information includes storage location information of the metadata of the to-be-recovered data, and the metadata of the to-be-recovered data may be obtained based on the storage location information.

The storage location information described in this application may be an identifier of a storage unit.

S704: The backup storage management device reads the to-be-recovered data based on the list information of the third storage pool and the storage location information of the to-be-recovered data.

The list information of the third storage pool indicates information about storage units in the third storage pool. An access path of a storage unit storing the to-be-recovered data is obtained based on an identifier and an access path of each storage unit indicated by the information and the storage location information of the to-be-recovered data, and then each data block of the to-be-recovered data is read from the storage unit based on the access path, to obtain the to-be-recovered data.

The foregoing mainly describes the solutions provided in embodiments of the present invention from a perspective of a working principle of a device. It may be understood that, to implement the foregoing functions, the device or the like includes corresponding hardware structures and/or software modules for executing the functions. A person of ordinary skill in the art should easily be aware that, in combination with units and algorithm steps of the examples described in embodiments disclosed in this specification, the present invention may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

In embodiments of this application, the backup apparatus provided in this application may be divided into function modules based on the foregoing method examples. For example, each function module may be obtained through division based on each corresponding function, or two or more functions may be integrated into one processing module. The integrated module may be implemented in a form of hardware, or may be implemented in a form of a software function module. In embodiments of this application, module division is an example, and is merely logical function division. In actual implementation, another division manner may be used.

When each function module is obtained through division based on each corresponding function, FIG. 8 is a possible diagram of a structure of a backup apparatus deployed in the computing device in the foregoing embodiments. The backup apparatus 80 may be a function module or a chip. As shown in FIG. 8, the backup apparatus 80 may include: a first obtaining unit 801, a second obtaining unit 802, a reading unit 803, and a backup unit 804. The first obtaining unit 801 is configured to perform the process S401 in FIG. 4 or FIG. 5, or perform the process S601 in FIG. 6, or perform the process S701 in FIG. 7. The second obtaining unit 802 is configured to perform the process S402 in FIG. 4 or FIG. 5, or perform the process S702 in FIG. 7. The reading unit 803 is configured to perform the process S403 in FIG. 4 or FIG. 5. The backup unit 804 is configured to perform the process S404 in FIG. 4 or FIG. 5, or the process S405 in FIG. 5. All related content of the steps in the foregoing method embodiments may be cited in function descriptions of the corresponding function modules. Details are not described herein again.

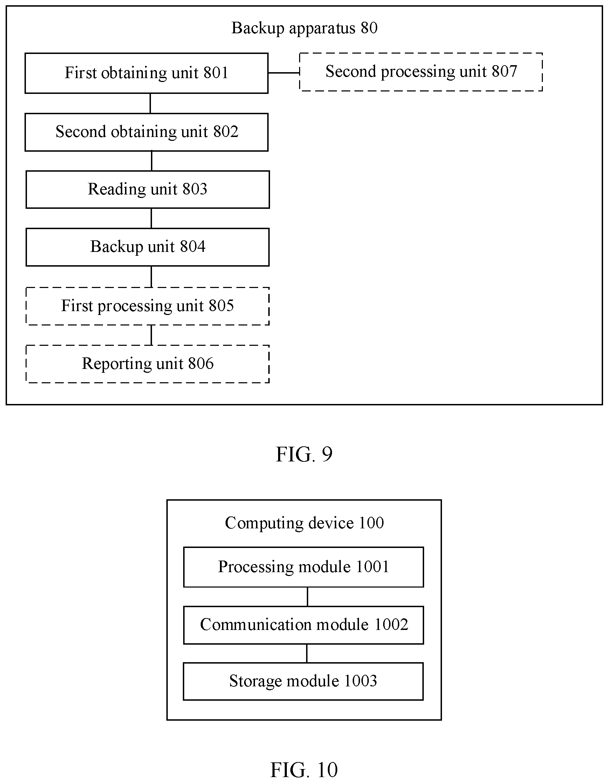

Further, as shown in FIG. 9, the backup apparatus 80 may further include a first processing unit 805, configured to perform the process S404 in FIG. 5.

Further, as shown in FIG. 9, the backup apparatus 80 may further include a reporting unit 806, configured to report information about a first storage unit storing metadata of to-be-backed-up data.

Further, as shown in FIG. 9, the backup apparatus 80 may further include a second processing unit 807, configured to perform the process S602 in FIG. 6.

When an integrated unit is used, FIG. 10 is a diagram of a possible structure of a computing device in the foregoing embodiments. The computing device 100 may include: a processing module 1001 and a communication module 1002. The processing module 1001 is configured to control and manage an action of the computing device 100, and the communication module 1002 is configured to communicate with another device. For example, the processing module 1001 is configured to perform any one of the processes S401 to S404 in FIG. 4 or FIG. 5. The computing device 100 may further include a storage module 1003, configured to store program code and data of the computing device 100.

The processing module 1001 may be the processor 301 in the physical structure of the computing device 30 shown in FIG. 3, or may be a processor or a controller. For example, the processing module may be a CPU, a general-purpose processor, a DSP, an ASIC, an FPGA or another programmable logic device, a transistor logic device, a hardware component, or any combination thereof. The processing module may implement or execute various example logical blocks, modules, and circuits described with reference to content disclosed in this application. Alternatively, the processing module 1001 may be a combination for implementing computing functions, such as a combination of one or more microprocessors, a combination of a DSP and a microprocessor, or the like. The communication module 1002 may be the transceiver 303 in the physical structure of the computing device 30 shown in FIG. 3. The communication module 1002 may be a communication port, or may be a transceiver, a transceiver circuit, a communication interface, or the like. Alternatively, the communication interface may communicate with another device through the foregoing element that has receiving and sending functions. The foregoing element that has receiving and sending functions may be implemented through an antenna and/or a radio frequency apparatus. The storage module 1003 may be the memory 302 in the physical structure of the computing device 30 shown in FIG. 3.

As described above, the backup apparatus 80 or the computing device 100 provided in embodiments of this application may be configured to implement corresponding functions in the methods implemented in the foregoing embodiments of this application. For ease of description, only parts related to embodiments of this application are shown. For specific technical details that are not disclosed, refer to embodiments of this application.

In another form of this embodiment, a computer-readable storage medium is provided. The computer-readable storage medium stores instructions. When the instructions are executed, the backup method in the foregoing method embodiments is performed.

In another form of this embodiment, a computer program product including instructions is provided. When the computer program product runs on a computer, the computer is enabled to perform the backup method in the foregoing method embodiments.

An embodiment of this application further provides a chip system. The chip system includes a processor, configured to implement the technical method in embodiments of the present invention. In a possible design, the chip system further includes a memory, configured to store necessary program instructions and/or data in embodiments of the present invention. In a possible design, the chip system further includes a memory, configured to be used by the processor to invoke application code stored in the memory. The chip system may include one or more chips, or may include a chip and another discrete component. This is not specifically limited in embodiments of this application.

The foregoing descriptions about implementations allow a person skilled in the art to understand that, for the purpose of convenient and brief description, division into the foregoing function modules is taken as an example for illustration. In actual application, the foregoing functions can be allocated to different function modules and implemented based on a requirement, that is, an inner structure of an apparatus is divided into different function modules to implement all or some of the functions described above.

In the several embodiments provided in this application, it should be understood that the disclosed apparatus and method may be implemented in other manners. For example, the described apparatus embodiment is merely an example. For example, division into the modules or the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, function units in embodiments of this application may be integrated into one processing unit, each of the units may exist alone physically, or two or more units may be integrated into one unit. The integrated unit may be implemented in a form of hardware, or may be implemented in a form of a software function unit.

When the integrated unit is implemented in the form of the software function unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk drive, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A backup method, wherein the method comprises:
obtaining backup task information, wherein the backup task information comprises information about to-be-backed-up data and a backup storage identifier;
obtaining list information of a first storage pool indicated by the backup storage identifier, wherein the list information indicates information about storage units in the first storage pool, the first storage pool comprises a plurality of storage units, and the plurality of storage units are located in at least two storage clusters;
reading the to-be-backed-up data from a production storage based on the information about the to-be-backed-up data; and
storing, based on the list information, the to-be-backed-up data in one or more storage units in the first storage pool.

2. The method according to claim 1, wherein the method further comprises:
generating metadata of the to-be-backed-up data, wherein the metadata of the to-be-backed-up data comprises an identifier of one or more storage units storing the to-be-backed-up data.

3. The method according to claim 2, wherein the backup task information further comprises storage location information of metadata of a predecessor copy, and the predecessor copy is a copy of a backup object, in a previous backup, to which the to-be-backed-up data belongs; and
the metadata of the to-be-backed-up data further comprises storage location information of data that is not modified by the to-be-backed-up data in the predecessor copy, wherein
the storage unit storing the to-be-backed-up data and a storage unit storing the data not modified by the to-be-backed-up data are located in different storage clusters.

4. The method according to any one of claims 1 to 3, wherein the to-be-backed-up data belongs to a first backup file; and
the backup task information further comprises information about data that is not modified by the to-be-backed-up data and that is in the first backup file.

5. The method according to claim 2 or 3, wherein the method further comprises:
storing the metadata of the to-be-backed-up data in a first storage unit; and
reporting information about the first storage unit.

6. The method according to any one of claims 1 to 5, wherein the backup storage identifier comprises an identifier of the first storage pool or an identifier of a repository corresponding to the first storage pool.

7. The method according to any one of claims 1 to 6, wherein the method further comprises:
obtaining configuration task information, wherein the configuration task indicates to configure a second storage unit as a resource of a second storage pool, the second storage pool comprises a plurality of storage units, and the plurality of storage units comprised in the second storage pool are located in at least two storage clusters; and
recording information about the second storage unit in list information of the second storage pool.

8. The method according to any one of claims 1 to 7, wherein the method further comprises:
obtaining recovery task information, wherein the recovery task information comprises information about to-be-recovered data;
obtaining list information of a third storage pool that stores the to-be-recovered data;
obtaining metadata of the to-be-recovered data based on the information about the to-be-recovered data, wherein the metadata of the to-be-recovered data comprises storage location information of the to-be-recovered data; and
reading the to-be-recovered data based on the list information of the third storage pool and the storage location information of the to-be-recovered data.

9. A backup method, applied to a backup system, wherein the backup system comprises a backup control device, a backup storage device, and a production storage device, and the method comprises:
sending, by the backup control device, backup task information to the backup storage device, wherein the backup task information comprises information about to-be-backed-up data and a backup storage identifier;
obtaining, by the backup storage device, list information of a first storage pool indicated by the backup storage identifier, wherein the list information indicates information about storage units in the first storage pool, the first storage pool comprises a plurality of storage units, and the plurality of storage units are located in at least two storage clusters;
reading, by the backup storage device, the to-be-backed-up data from the production storage device based on the information about the to-be-backed-up data; and
storing, by the backup storage device based on the list information, the to-be-backed-up data in one or more storage units in the first storage pool.

10. A backup apparatus, wherein the apparatus comprises:
a first obtaining unit, configured to obtain backup task information, wherein the backup task information comprises information about to-be-backed-up data and a backup storage identifier;
a second obtaining unit, configured to obtain list information of a first storage pool indicated by the backup storage identifier, wherein the list information indicates information about storage units in the first storage pool, the first storage pool comprises a plurality of storage units, and the plurality of storage units are located in at least two storage clusters;
a reading unit, configured to read the to-be-backed-up data from a production storage based on the information about the to-be-backed-up data; and
a backup unit, configured to store, based on the list information, the to-be-backed-up data in one or more storage units in the first storage pool.

11. The apparatus according to claim 10, wherein the apparatus further comprises:
a first processing unit, configured to generate metadata of the to-be-backed-up data, wherein the metadata of the to-be-backed-up data comprises an identifier of one or more storage units storing the to-be-backed-up data.

12. The apparatus according to claim 11, wherein the backup task information further comprises storage location information of metadata of a predecessor copy, and the predecessor copy is a copy of a backup object, in a previous backup, to which the to-be-backed-up data belongs; and
the metadata of the to-be-backed-up data further comprises storage location information of data that is not modified by the to-be-backed-up data in the predecessor copy; and the storage unit storing the to-be-backed-up data and a storage unit storing the data that is not modified by the to-be-backed-up data are located in different storage clusters.

13. The apparatus according to any one of claims 10 to 12, wherein the to-be-backed-up data belongs to a first backup file, and the backup task information further comprises information about data that is not modified by the to-be-backed-up data and that is in the first backup file.

14. The apparatus according to claim 11 or 12, wherein
the backup unit is further configured to store the metadata of the to-be-backed-up data in a first storage unit; and
the apparatus further comprises a reporting unit, configured to report information about the first storage unit.

15. The apparatus according to any one of claims 10 to 14, wherein the backup storage identifier comprises an identifier of the first storage pool or an identifier of a repository corresponding to the first storage pool.

16. A backup system, wherein the backup system comprises a backup control device, a backup storage device, and a production storage device, wherein
the backup control device is configured to send backup task information to the backup storage device, wherein the backup task information comprises information about to-be-backed-up data and a backup storage identifier; and
the backup storage device is configured to: obtain list information of a first storage pool indicated by the backup storage identifier, wherein the list information indicates information about storage units in the first storage pool, the first storage pool comprises a plurality of storage units, and the plurality of storage units are located in at least two storage clusters; read the to-be-backed-up data from the production storage device based on the information about the to-be-backed-up data; and store, based on the list information, the to-be-backed-up data in one or more storage units in the first storage pool.

17. A computing device, wherein the computing device comprises a processor and a memory, wherein
the memory is connected to the processor; the memory is configured to store computer instructions, and when the processor executes the computer instructions, the computing device is enabled to perform the backup method according to any one of claims 1 to 8.

18. A computer-readable storage medium, comprising instructions, wherein when the instructions are run on a computer, the computer is enabled to perform the backup method according to any one of claims 1 to 8.

19. A computer program product, wherein when the computer program product runs on a computer, the computer is enabled to perform the backup method according to any one of claims 1 to 8.
